# EUROPEAN PATENT APPLICATION

(11) **EP 4 132 096 A1**
(43) Date of publication of application: **08.02.2023**
(21) Application number: 21781737.8
(22) Date of filing: 08.02.2021
(51) Int. Cl.: H04W 36/00, H04W 36/08

(54) **CELL RESELECTION METHOD FOR INACTIVE TERMINAL, BASE STATION, AND COMPUTER-READABLE MEDIUM**

(30) Priority: 01.04.2020 CN 202010252361
(71) Applicant: ZTE Corporation, Shenzhen, Guangdong 518057 (CN)
(72) Inventor: CAO, Yijin, Shenzhen, Guangdong 518057 (CN)
(74) Representative: Aipex B.V.
(86) International application number: PCT/CN2021/075905
(87) International publication number: WO 2021/196897

(57) **Abstract**

Provided is a cell reselection method for a terminal in an inactive state. The method includes steps described below. A reselection cell list sent by a target terminal is acquired; and a reselection result is determined according to cell information recorded in the reselection cell list, and the reselection result is fed back to the target terminal. A base station and a computer-readable medium are further provided.

## Description

This application claims priority to Chinese Patent Application No. 202010252361.0 filed with the China National Intellectual Property Administration (CNIPA) on Apr. 01, 2020, the disclosure of which is incorporated herein by reference in its entirety.

### TECHNICAL FIELD

The present disclosure relates to the field of communication technology, for example, to a cell reselection method for a terminal in an inactive state, a base station and a computer-readable medium.

### BACKGROUND

In the 5th generation mobile communication system (5G), an inactive state is introduced into states of a User Equipment (UE). When the LTE in the inactive state moves to other base stations, the LTE will perform cell reselection access under a target base station; and in the reselection access process, after the LTE determines the target base station, the target base station needs to acquire, through an interconnection interface, context information of the UE from the last serving base station which previously provides a service for the LTE, and the last serving base station needs to transmit data received from a core network back to the target base station.

### SUMMARY

The present disclosure provides a cell reselection method for a terminal in an inactive state, a base station and a computer-readable medium.

A cell reselection method for a terminal in an inactive state is provided and includes steps described below.

A reselection cell list sent by a target terminal is acquired; and a reselection result is determined according to cell information recorded in the reselection cell list, and the reselection result is fed back to the target terminal.

A base station is further provided.

The base station includes one or more processors and a storage apparatus storing one or more programs. The one or more programs, when executed by the one or more processors, cause the one or more processors to implement the cell reselection method for the terminal in the inactive state provided in the present disclosure.

A computer-readable medium storing a computer program is further provided. The program, when executed by a processor, implements the cell reselection method for the terminal in the inactive state provided in the present disclosure.

### BRIEF DESCRIPTION OF DRAWINGS

FIG. 1 is a flowchart of a cell reselection method for a terminal in an inactive state according to an embodiment of the present disclosure;
FIG. 2 is a flowchart of another cell reselection method for a terminal in an inactive state according to an embodiment of the present disclosure;
FIG. 3 is a flowchart of another cell reselection method for a terminal in an inactive state according to an embodiment of the present disclosure;
FIG. 4 is a flowchart of another cell reselection method for a terminal in an inactive state according to an embodiment of the present disclosure;
FIG. 5 is a flowchart of another cell reselection method for a terminal in an inactive state according to an embodiment of the present disclosure; and
FIG. 6 is a structural diagram of a base station according to an embodiment of the present disclosure.

### DETAILED DESCRIPTION

A cell reselection method for a terminal in an inactive state, a base station and a computer-readable medium provided in the present disclosure are described below with reference to the drawings.

Example embodiments are described hereinafter with reference to the drawings, but the example embodiments may be embodied in different forms and are not to be construed as limited to the embodiments set forth herein.

Terms used herein are merely used for describing embodiments and are not intended to limit the present disclosure. As used herein, singular forms "one" and "the" are intended to include a plural form, unless otherwise specified in the context. The terms "include" and/or "made of" used herein specify the existence of the feature, entity, step, operation, element, and/or component, without excluding the existence or addition of one or more other features, entities, steps, operations, elements, components, and/or combinations thereof.

Although terms such as first and second may be used herein to describe elements/instructions/requests, these elements/instructions/requests are not limited to the terms. These terms are only used for distinguishing one element/instruction/request from another element/instruction/request.

Unless otherwise defined, all the terms (including technical and scientific terms) used herein have the same meanings as commonly understood by those of ordinary skill in the art. Terms, such as those defined in commonly used dictionaries, are to be interpreted as having meanings consistent with their meanings in the context of the related art and the present disclosure and are not to be interpreted in an idealized or overly formal sense unless so defined herein.

The networking of the 5G system is divided into a central unit (CU) and a distribute unit (DU). A UE accessing the 5G system has three states, that is, a connected state, an idle state and an inactive state, respectively. The connected state refers to a state where the UE is activated at both the CU side and the DU side, the idle state refers to a state where the context of the UE is released, and the inactive state refers to an intermediate state between the idle state and the connected state, that is, a state in which the CU side retains the context information of the UE, and only the DU side releases the context information of the UE. Compared with the UE entering the connected state from the idle state, the UE entering the connected state from the inactive state saves the time for establishing the context of the UE. When the UE does not send and receive data for a long time, the UE enters the inactive state from the connected state; in the inactive state, when the UE moves to other base stations, the UE needs to determine a new target base station to perform cell reselection access. In the related art, after the UE determines the target base station, in the process of the UE accessing the target base station, the target base station acquires the context information of the UE from an original serving base station of the UE to complete the access process; however, when the target base station and the original serving base station cannot directly interact with each other, the original serving base station often retains the context information of the LTE for a long time, leading to a too long delay of the UE accessing the target base station. The cell reselection method for a terminal in the inactive state provided in the present disclosure is used for solving the preceding technical problem.

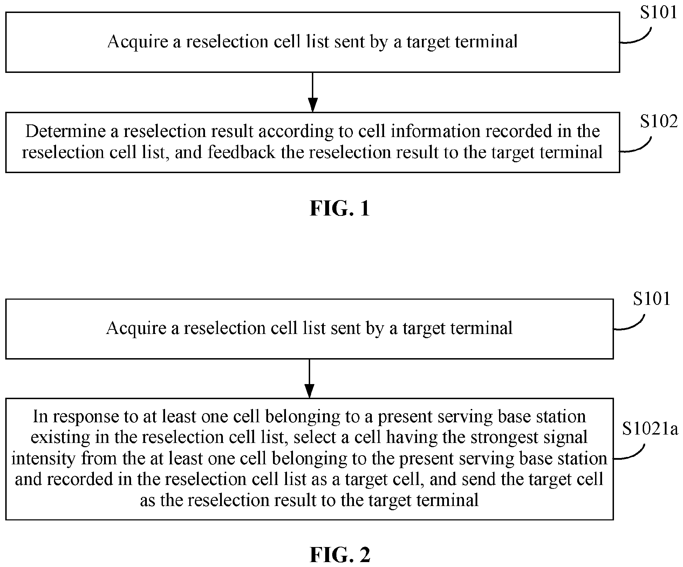

The cell reselection method for a terminal in an inactive state provided in the present disclosure uses a base station in the 5G system as an execution subject. FIG. 1 is a flowchart of a cell reselection method for a terminal in an inactive state according to an embodiment of the present disclosure. In the method, a current serving base station to which a target terminal belongs is used as an execution subject. As shown in FIG. 1, the method includes steps described below.

In S101, a reselection cell list sent by a target terminal is acquired.

In S102, a reselection result is determined according to cell information recorded in the reselection cell list, and the reselection result is fed back to the target terminal.

When the target terminal in the inactive state moves to the edge of the current serving base station, a cell reselection mechanism is triggered, and the target terminal acquires a reselection cell list including reselection cells suitable for performing reselection access at the current position. The reselection cell list contains cell identifiers of cells on which reselection access can be performed, and the number of reselection cell lists may be one or multiple. In the present disclosure, after acquiring the reselection cell list, the target terminal sends the reselection cell list to the current serving base station; after acquiring the reselection cell list, the serving base station determines the reselection result according to the cell information recorded in the reselection cell list and feeds back the reselection result to the target terminal, so that the current serving base station can process context information of the target terminal (releasing the context information, or transmitting the context information and releasing the context information) in time according to the reselection result. The reselection result includes a determined target cell, or that the target cell cannot be determined.

The current serving base station refers to the base station to which the cell where the target terminal when entering the inactive state from the connected state is located belongs.

According to the cell reselection method for a terminal in an inactive state provided in the present disclosure, the reselection cell list of the target terminal is acquired through the current serving base station of the target terminal, the reselection result is determined according to the cell information recorded in the cell reselection list, and the reselection result is fed back to the target terminal, so that the current serving base station of the target terminal can determine the reselection result in the process of the target terminal performing cell reselection, and the current serving base station can process the context of the target terminal in the process of the target terminal performing cell reselection. Compared with the related art, since the current serving base station can process the context information of the target terminal in advance, on the one hand, the delay of the terminal subsequently accessing the target cell is reduced; on the other hand, the current serving base station can accurately determine the time when the context information of the target terminal needs to be released, thereby avoiding the problem of waste of storage resources caused by the current serving base station saving the context information of the target terminal for a long time.

FIG. 2 shows another cell reselection method for a terminal in an inactive state according to an embodiment of the present disclosure. As shown in FIG. 2, in some embodiments, the method includes the preceding S 101 and the preceding S102, and S102 includes S1021a.

In S1021a, in response to at least one cell belonging to a present serving base station existing in the reselection cell list, a cell having the strongest signal intensity is selected from the at least one cell belonging to the present serving base station and recorded in the reselection cell list as a target cell, and the target cell is sent as the reselection result to the target terminal.

In the embodiment of the present disclosure, in the process of the current serving base station of the target terminal determining the reselection result, when the reselection cell list contains the cell belonging to the current serving base station, it is indicated that the current position of the target terminal is still within the range covered by the current serving base station; at this moment, a cell under the current serving base station is selected as the target cell and as the reselection result, so that the transmission of the context information of the target terminal can be avoided, the target terminal does not need to acquire the context information of the target terminal again when entering the connected state from the inactive state after the reselection occurs; therefore, the access delay of the terminal in the inactive state is shortened, and the rapid access of the target terminal is achieved. When receiving a feedback message carrying the target cell fed back by the current serving base station, the target terminal directly accesses the target cell. For example, when the target cell is determined from the at least one cell belonging to the present serving base station and recorded in the reselection cell list, a cell having the strongest signal intensity may be selected from the at least one cell belonging to the present serving base station and recorded in the reselection cell list as the target cell.

In practical applications, the target cell may also be determined in other manners. In some embodiments, a cell may be randomly selected from the at least one cell belonging to the present serving base station and recorded in the reselection cell list as the target cell. In other embodiments, the first cell of the cell belonging to the present serving base station and recorded in the reselection cell list may also be used as the target cell. The method for determining the target cell is not limited in the present disclosure, as long as the target cell can be selected from the at least one cell belonging to the present serving base station and recorded in the reselection cell list.

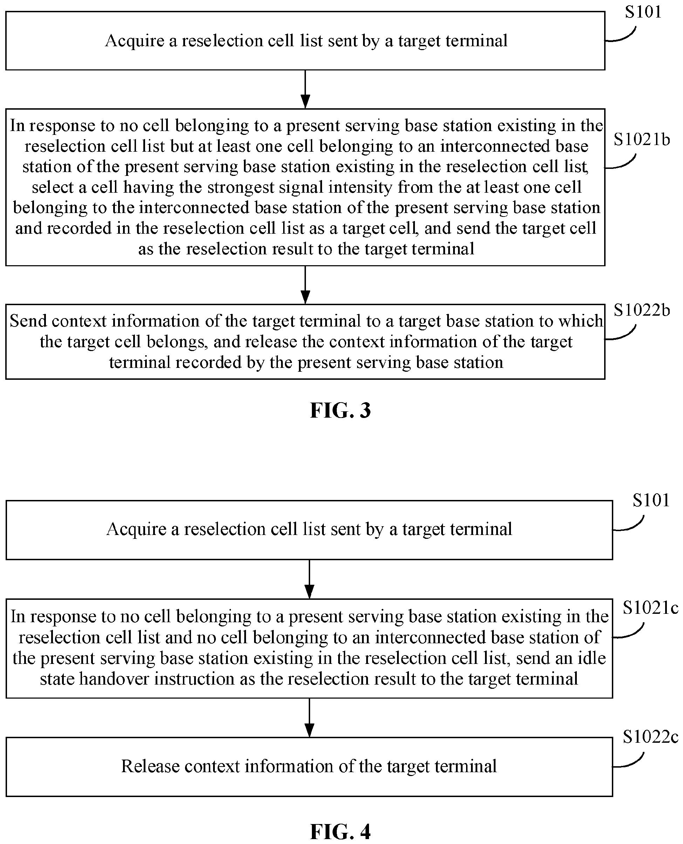

FIG. 3 shows another cell reselection method for a terminal in an inactive state according to an embodiment of the present disclosure. As shown in FIG. 3, in some embodiments, the method includes the preceding S 101 and the preceding S102, and S102 includes S1021b.

In S 1021b, in response to no cell belonging to a present serving base station existing in the reselection cell list but at least one cell belonging to an interconnected base station of the present serving base station existing in the reselection cell list, a cell having the strongest signal intensity is selected from the at least one cell belonging to the interconnected base station of the present serving base station and recorded in the reselection cell list as a target cell, and the target cell is sent as the reselection result to the target terminal.

In the present disclosure, the interconnected base station refers to a base station interacting with the present serving base station through an interconnection interface.

In the embodiment of the present disclosure, in the process of the current serving base station of the target terminal determining the reselection result, when no cell belonging to the present serving base station exists in the reselection cell list but at least one cell belonging to the interconnected base station of the present serving base station exists in the reselection cell list, the current serving base station determines the target cell from the at least one cell belonging to the interconnected base station of the present serving base station and recorded in the reselection cell list as the reselection result. Since the interconnected base station of the current serving base station can directly exchange information with the current serving base station, selecting a cell under the interconnected base station as the target cell for access can enable the context information of the target terminal stored on the current serving base station to be directly transmitted to the target base station without the help of a core network, so that the rapid transmission of the context information of the target terminal is achieved, and the delay of the target terminal subsequently accessing the target cell is further reduced. At the same time, the current serving base station of the target terminal also determines that the context information of the target terminal stored on the current serving base station needs to be released, so that the current serving base station can release the context information in time after transmitting the context information of the target terminal to the target base station, and thus the long-term occupation of the storage resources of the current serving base station is avoided.

In the present disclosure, when the target cell is determined from the at least one cell belonging to the interconnected base station of the present serving base station and recorded in the reselection cell list, a cell having the strongest signal intensity may be selected from the at least one cell belonging to the interconnected base station of the present serving base station and recorded in the reselection cell list as the target cell. In the present disclosure, the target cell may also be determined in other manners. In some embodiments, a cell may be randomly selected as the target cell from the at least one cell belonging to the interconnected base station of the present serving base station and recorded in the reselection cell list. In other embodiments, the first cell of the cell belonging to the interconnected base station of the present serving base station and recorded in the reselection cell list may also be used as the target cell. The method for determining the target cell is not limited in the present disclosure, as long as the target cell can be selected from the at least one cell belonging to the interconnected base station of the present serving base station and recorded in the reselection cell list.

In some embodiments, after the preceding S 1021b, S 1022b is further included.

In S 1022b, context information of the target terminal is sent to a target base station to which the target cell belongs, and the context information of the target terminal recorded by the present serving base station is released.

After selecting a cell under the base station interconnected with the present serving base station as the reselection result, the current serving base station of the target terminal sends the context information of the target terminal stored by the current serving base station to the target base station, so as to transmit the context information of the target terminal in advance before the target terminal performs target cell access and then release the context information of the target terminal to release the storage resources of the current serving base station in time.

In some embodiments, in S 1022b, sending the context information of the target terminal to the target base station to which the target cell belongs may be achieved by means of an interconnection interface between the target base station and the current serving base station.

In some embodiments, the interconnection interface between the target base station and the current serving base station is an Xn interface.

FIG. 4 shows another cell reselection method for a terminal in an inactive state according to an embodiment of the present disclosure. As shown in FIG. 4, in some embodiments, the method includes the preceding S101 and the preceding S102, and S102 includes S1021c.

In S1021c, in response to no cell belonging to a present serving base station existing in the reselection cell list and no cell belonging to an interconnected base station of the present serving base station existing in the reselection cell list, an idle state handover instruction is sent as the reselection result to the target terminal.

In the embodiment of the present disclosure, in the process of the current serving base station of the target terminal determining the reselection result, when all cells contained in the reselection cell list neither belong to the current serving base station, nor belong to the interconnected base station interconnected with the current serving base station, it is indicated that if the target terminal continues to perform the cell reselection process, the access success rate will be relatively low; at this moment, the current serving base station notifies the target terminal to enter the idle state, so that the target terminal re-enters the cell reselection access mechanism after entering the idle state, and thus the access success rate is improved to a certain extent.

In some embodiments, while S1021c is executed, S1022c is further included.

In S1022c, context information of the target terminal is released.

In a case where no cell belonging to the current serving base station exists in the reselection cell list and no cell belonging to the interconnected base station of the current serving base station exists in the reselection cell list, the current serving base station actively releases the context information of the target terminal, so that the storage resources of the current serving base station can be released in time, the long-term occupation of the storage resources of the current serving base station is avoided, and resource waste is avoided.

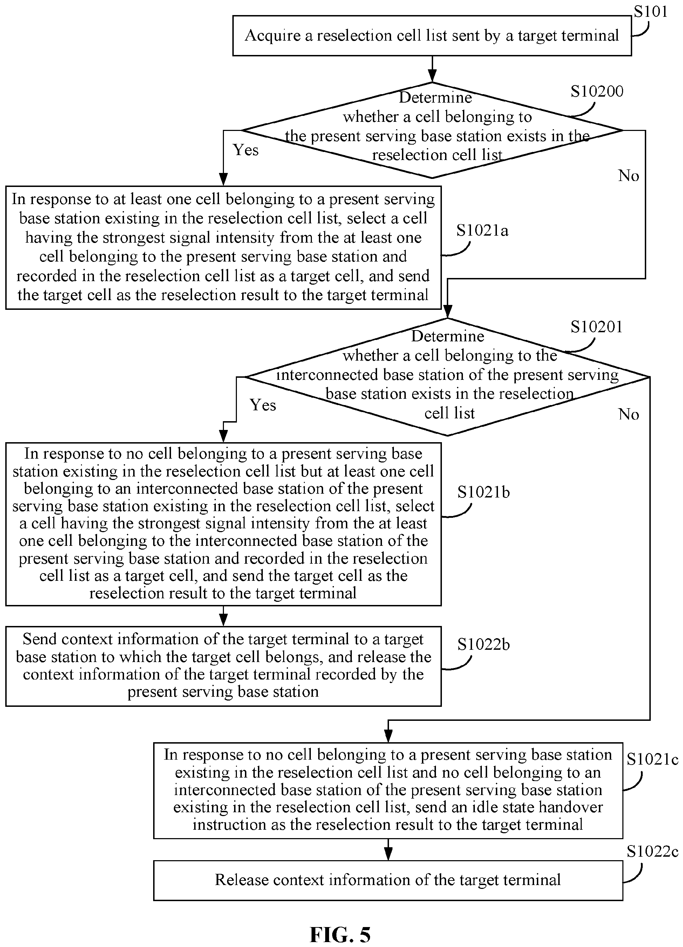

FIG. 5 shows another cell reselection method for a terminal in an inactive state according to an embodiment of the present disclosure. As shown in FIG. 5, in some embodiments, the method includes the preceding S101 and the preceding S102, and S102 includes S10200.

In S 10200, whether a cell belonging to the present serving base station exists in the reselection cell list is determined.

In S 10200, when it is determined that the cell belonging to the present serving base station exists in the reselection cell list, the preceding S1021a is executed; when it is determined that no cell belonging to the present serving base station exists in the reselection cell list, S10201 is executed.

In S10201, whether a cell belonging to the interconnected base station of the present serving base station exists in the reselection cell list is determined.

In S10201, when it is determined that the cell belonging to the interconnected base station of the present serving base station exists in the reselection cell list, the preceding step S 1021b is executed; when it is determined that no cell belonging to the interconnected base station of the present serving base station exists in the reselection cell list, the preceding step S 1021c is executed.

In the embodiment of the present disclosure, after acquiring the reselection cell list sent by the target terminal, the current serving base station performs identification and determination on cells in the reselection cell list. The reselection cell list records identifiers of multiple reselectable cells, and the identifier of a cell can indicate which base station the cell belongs to; at the same time, the current serving base station stores a list of interconnected base stations having an interconnection relationship with the current serving base station; therefore, according to the identifiers of the cells and the list of the interconnected base stations stored by the current serving base station, the current serving base station can determine which cells in the reselection cell list belong to the current serving base station and which cells belong to the interconnected base stations.

In the preceding embodiments, different steps may be combined to obtain a new technical solution, which should also fall within the protection scope of the present disclosure.

The cell reselection method for the terminal in the inactive state provided in the present disclosure is described below in conjunction with specific scenes.

### Scene one

(1) The UE accesses cell 11 (cell 11 belongs to next generation NodeB 1 (gNB 1)), and then enters the inactive state.
(2) The UE moves and enters the edge of cell11, and thus reselection needs to be performed; after the reselection mechanism is triggered, cells which satisfy a reselection condition and include cell21, cell12 and cell13 are re-selected, and the UE sends a cell list of cell21, cell12 and cell13 to gNB1.
(3) After receiving the reselection target cell list, gNB1 selects cell12 (cell12 and cell11 both belong to the base station gNB1) as the target cell and sends cell12 to the UE.
(4) After receiving the identifier containing cell12 sent by gNB1, the LTE accesses cell12 through the reselection.

### Scene two

(1) The UE accesses cell 11 (cell 11 belongs to the base station gNB 1), and then enters the inactive state.
(2) The UE moves and enters the edge of cell11, and thus reselection needs to be performed; after the reselection mechanism is triggered, cells which satisfy a reselection condition and include cell31, cell32, cell21 and cell22 are re-selected, and the UE sends a cell list of cell31, cell32, cell21 and cell22 to gNB1.
(3) After receiving the reselection target cell list, gNB1 selects cell21 (it is determined that the base station gNB2 to which cell21 belongs and the current serving base station gNB1 are interconnected base stations) as the target cell and sends cell21 to the UE, and at the same time, gNB1 transmits context information of the UE to gNB2 through an Xn interface.
(4) After receiving the identifier containing cell21 sent by gNB1, the LTE accesses cell21 through the reselection.

### Scene three

(1) The UE accesses cell11 (cell11 belongs to the base station gNB1), and then enters the inactive state.
(2) The UE moves and enters the edge of cell11, and thus reselection needs to be performed; after the reselection mechanism is triggered, the cell which satisfies a reselection condition and includes cell31 is reselected, and the LTE sends a cell list of cell31 to gNB 1.
(3) gNB1 determines that the base station to which cell31 belongs and gNB1 are non-interconnected base stations, thus sends a notification of entering the idle state to the UE while releasing local context information of the UE.
(4) After receiving the state transition notification fed back by gNB1, the UE enters the idle state and re-performs the cell access reselection flow.

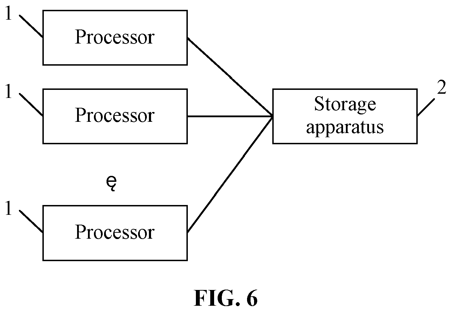

FIG. 6 is a structural diagram of a base station according to an embodiment of the present disclosure. As shown in FIG. 6, the base station includes one or more processors 1 and a storage apparatus 2. The storage apparatus 2 stores one or more programs which, when executed by the one or more processors 1, cause the one or more processors 1 to implement the cell reselection method for the terminal in the inactive state according to the embodiments of the present disclosure.

An embodiment of the present disclosure further provides a computer-readable medium storing a computer program which, when executed by a processor, implements the cell reselection method for the terminal in the inactive state according to the embodiments of the present disclosure.

All or part of the steps in the method, and function modules/units in the system and apparatus disclosed above may be implemented as software, firmware, hardware and appropriate combinations thereof. In the hardware implementation, the division of the function modules/units in the preceding description may not correspond to the division of physical components. For example, one physical component may have multiple functions, or one function or step may be performed cooperatively by multiple physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As known to those of ordinary skill in the art, the term computer storage media includes volatile and non-volatile as well as removable and non-removable media implemented in any method or technology for storing information (such as computer-readable instructions, data structures, program modules or other data). The computer storage media include, but are not limited to, a random-access memory (RAM), a read-only memory (ROM), an electrically erasable programmable read-only memory (EEPROM), a flash memory or another memory technology, a compact disc read-only memory (CD-ROM), a digital versatile disc (DVD) or another optical disc storage, a magnetic cassette, a magnetic tape, disk storage or another magnetic storage device, or any other medium used for storing desired information and accessible by a computer. Additionally, the communication media generally include computer-readable instructions, data structures, program modules, or other data in modulated data signals such as carriers or other transport mechanisms and may include any information delivery medium.

Example embodiments have been disclosed herein. Although terms are used, these terms are used only and should only be construed in a generic and illustrative sense and are not intended to be limiting. In some instances, unless otherwise indicated, features, characteristics and/or elements described in conjunction with particular embodiments may be used alone or may be used in combination with features, characteristics and/or elements described in conjunction with other embodiments.

## Claims

1. A cell reselection method for a terminal in an inactive state, comprising:
acquiring a reselection cell list sent by a target terminal; and
determining a reselection result according to cell information recorded in the reselection cell list, and feeding back the reselection result to the target terminal.

2. The method according to claim 1, wherein determining the reselection result according to the cell information recorded in the reselection cell list, and feeding back the reselection result to the target terminal comprises:
in response to at least one cell belonging to a present serving base station existing in the reselection cell list, selecting a cell having a strongest signal intensity from the at least one cell belonging to the present serving base station and recorded in the reselection cell list as a target cell, and sending the target cell as the reselection result to the target terminal.

3. The method according to claim 1, wherein determining the reselection result according to the cell information recorded in the reselection cell list, and feeding back the reselection result to the target terminal comprises:
in response to no cell belonging to a present serving base station existing in the reselection cell list but at least one cell belonging to an interconnected base station of the present serving base station existing in the reselection cell list, selecting a cell having a strongest signal intensity from the at least one cell belonging to the interconnected base station of the present serving base station and recorded in the reselection cell list as a target cell, and sending the target cell as the reselection result to the target terminal.

4. The method according to claim 3, after selecting the cell having the strongest signal intensity from the at least one cell belonging to the interconnected base station of the present serving base station and recorded in the reselection cell list as the target cell, further comprising:
sending context information of the target terminal to a target base station to which the target cell belongs, and releasing the context information of the target terminal recorded by the present serving base station.

5. The method according to claim 4, wherein sending the context information of the target terminal to the target base station to which the target cell belongs comprises:
sending the context information of the target terminal to the target base station through an interconnection interface between the target base station and the present serving base station.

6. The method according to claim 1, wherein determining the reselection result according to the cell information recorded in the reselection cell list, and feeding back the reselection result to the target terminal comprises:
in response to no cell belonging to a present serving base station existing in the reselection cell list and no cell belonging to an interconnected base station of the present serving base station existing in the reselection cell list, sending an idle state handover instruction as the reselection result to the target terminal.

7. The method according to claim 6, while sending the idle state handover instruction as the reselection result to the target terminal, further comprising:
releasing context information of the target terminal.

8. The method according to any one of claims 1 to 7, wherein determining the reselection result according to the cell information recorded in the reselection cell list, and feeding back the reselection result to the target terminal comprises:
determining whether a cell belonging to the present serving base station exists in the reselection cell list; and
in response to no cell belonging to the present serving base station existing in the reselection cell list, determining whether a cell belonging to the interconnected base station of the present serving base station exists in the reselection cell list.

9. A base station, comprising:
at least one processor; and
a storage apparatus storing at least one program which, when executed by the at least one processor, causes the at least one processor to implement the cell reselection method for the terminal in the inactive state according to any one of claims 1 to 8.

10. A computer-readable medium storing a computer program which, when executed by a processor, implements the cell reselection method for the terminal in the inactive state according to any one of claims 1 to 8.
